# NEW EUROPEAN PATENT SPECIFICATION

(11) **EP 0 678 072 B2**
(45) Date of publication and mention of the opposition decision: **14.04.2004**
(45) Mention of the grant of the patent: 06.10.1999
(21) Application number: 95900712.1
(22) Date of filing: 11.11.1994
(51) Int. Cl.: B32B 7/12, E04B 1/78, B32B 15/14

(54) **MINERAL WOOL PRODUCT AND METHOD FOR PRODUCING IT**
PRODUKT AUS MINERALWOLLE UND VERFAHREN ZU SEINER HERSTELLUNG
PRODUIT A BASE DE LAINE MINERALE ET PROCEDE DE PRODUCTION DE CE PRODUIT

(30) Priority: 11.11.1993 DE 4338619; 07.10.1994 DE 4435917
(43) Date of publication of application: 25.10.1995
(73) Proprietor: ISOVER SAINT-GOBAIN, F-92400 Courbevoie (FR)
(72) Inventor: KUMMERMEHR, Hans, D-67063 Ludwigshafen (DE)
(74) Representative: KUHNEN & WACKER
(86) International application number: PCT/EP1994/003737
(87) International publication number: WO 1995/013185

(56) References cited:
- EP-A- 0 005 843
- EP-A- 0 146 012
- EP-A- 0 315 127
- EP-A- 0 449 414
- WO-A-82/01684
- AU-B- 9 220 671
- DE-A- 2 460 508
- DE-A- 2 935 580
- DE-C- 1 299 105
- FR-A- 2 606 023
- GB-A- 1 386 018
- GB-A- 2 030 516
- GB-A- 2 107 371
- JP-A- 58 160 455
- SE-A- 402 071
- US-A- 4 692 366

## Description

The invention concerns a rollable mineral wool felt laminated with a foil by means of an organic glue, and a method for producing such a mineral wool felt.

Mineral wool products laminated with a metal foil are e.g. known from DE-PS 24 60 508. In order to fasten the laminating sheet having the form of a metal foil on the mineral wool product, an inorganic glue is used. In this manner, an increase of the fire load of the laminated product due to the glue is avoided, and thus (despite the use of organic substances, however in small amounts, as binders) classification e.g. into material class A2 - fireproof construction materials - as specified by DIN 4102 is achieved without difficulties. However, in the case of using an organic glue for fastening the laminating sheet at otherwise unmodified formation of the mineral wool product, as a rule merely conformity with material class Bl - hardly inflamable construction materials - as specified by DIN 4102 is achieved as in fire behavior testing, the organic glue accelerates the progress of the decomposition front so intensely that the requirements to a fireproof classification generally cannot be satisfied any more.

It was, however, found that the available inorganic glues on the basis of water glass or silica sol for the purpose of fastening the lamination on mineral wool products are not fully satisfactory in many cases. This is particularly true for mineral wool products having low flexural strength as these inorganic glues are relatively brittle and have a tendency to delaminate when the product is bent. particularly one main applicational field for such laminated mineral wool products, rolled felt, requires a glue having good bending flexibility, for otherwise the adhesive bond will be impaired already while the felt web is rolled. Inorganic glues therefore could not gain acceptance for many practical applications, such as in particular for laminated rolled felt, and thermo-activated organic glues which have a better adhesive capacity and which are more elastic were used instead.

In order to obtain a fireproof classification of mineral wool products while using organic glue, however, additional measures are required, above all the additional use of fireproofing agents. Using highly effective fireproofing agents, such as antimony trioxide, is unacceptable for reasons of protection of the environment, and less pollutant substitutes herefor, such as fireproofing agents which release water or nitrogen, are much less effective. In order to nevertheless obtain a fireproof classification of the product, the amount of used organic glue must consequently be kept as small as possible, which in turn makes it difficult to obtain the perfect adhesive bond. Thus obtaining a fireproof classification for a mineral wool product having a lamination fastened by means of organic glue is the result of much experimentation for obtaining a useful compromise between the technical requirements of fire protection and those of bonding, and precise monitoring of current production as to keeping all the parameters within narrow limits is a prerequisite if the fireproof classification is not to be endangered.

It is also known to use glues in form of foam. Document SE 402 071 discloses to apply components of a polyurethane foam or the like to a carrier layer before being brought together with mineral wool slabs which are to be joined together. DE 29 35 580 A1 generally discloses use of foamed hot-melt-type adhesives to connect objects. FR 2 606 023 refers to a method of bonding two elements in surface-to-surface contact wherein one of the parts may be a fiberglass panel which has to be covered to be suitable as fiber glass shell for automotive headliners. The glue will be sprayed in liquid condition in a fine mist under pressure on one of the surfaces to be bonded to form dispersed discrete liquid polyurethane droplets. Afterwards, the droplets will be foamed and expanded in discrete foam pods. The second surface to be joined will be applied and the foam will be cured under moderate heat and pressure. DE 25 03 123 A1 discloses a method for producing compound plates with a lamellar mineral wool panel covered on both sides by rigid covering boards. The glue used here is foamed in order to allow levelling out of different heights of the laminar strips in the mineral wool panel which occur due to cutting tolerances.

The present invention starts from a reliable mineral wool felt laminated with a foil as it is known for a long time under the name "Rollisol®".

With respect hereto, the invention is based on the object of providing a rollable mineral wool felt of the type mentioned above which is laminated with a foil adhering well even under flectional stress and which - if at all - at the most requires fireproofing agents which are non-pollutant in order to reliably obtain classification into a more favorable fire protection classification for construction materials, such as material class A2 as specified by DIN 4102.

This object is attained in accordance with the invention by a rollable mineral wool felt with the features of claim 1.

The reticulate structure of the glue substance enables concentration of the glue in single glue accumulations with glue-free spots in between them. In this manner, a good and - when viewed macroscopically - sufficiently complete adhesive effect may be achieved between the fibers adjacent the surface of the mineral wool product and the foil, without, however, an actually complete, i.e. a practically full surface glue film being required. Such a continuous glue film is replaced by the network of lines and dots of the glue structure on and between the surfaces of the fibers and the foil to be connected, with a reduction in the glue quantity being much greater relative to the decrease in the adhesive effect of the glue. In this manner, the amount of used glue may be reduced to such an extent that the reduced fire load of the product permits its fireproof classification. The reduction in the quantity of glue achieved in accordance with the invention brings about considerable additional advantages in practical terms e.g. also in view of glue costs and reduced capacities for drying or curing the glue.

A rollable mineral wool felt in accordance with the invention may be obtained by a method having the features of claim 2.

This results in the desired reticulate connecting structure in a reliable and well controllable manner, as the pore sizes and the further properties of the foam are well controllable, and thus the reticulate structures may be determined which occur during the lamination process or while the foam degenerates on and between the fiber surfaces and the foil surface. Application of the glue as a foam layer at the same time guarantees uniform distribution of the glue within the volume element predetermined by the thickness of the glue layer adjacent the foil surface, whereby the small quantity of glue used may take optimum effect in locking among each other the fibers located close to the surface and fastening the foil thereto.

If a metal foil is used as the foil, for which purpose particularly an aluminum foil is suited, a fireproofing agent may, as a rule, be dispensed with entirely in view of the small quantity of glue used for fastening the foil without thereby endangering the fireproof classification. If the foil, however, contains organic substances, as is particularly the case with a frequently preferred aluminium/kraft paper compound foil, the organic proportion thus increased may, if necessary, be neutralised in a simple manner by a non-pollutant fireproofing agent, if the combined fire load from the small quantity of glue and the organic foil component should at all threaten to endanger a fireproof classification.

Application of the glue is preferably carried out in such a manner that the layer of glue is spread onto one surface of the foil, and the side of the foil thus coated is then laid on and pressed against the fibrous surface. In comparison with another conceivable method, namely the glue at first being applied to the fibrous surface and the foil subsequently being laid on, this results in the advantage that spreading the glue on the foil is technically easier and intimate bonding of the glue and the foil is ensured. Subsequent impression of the glue layer arranged on the foil surface into the fibrous surface nevertheless ensures intimate bonding of the glue and the fibers, as in the case of application in the form of foam, quite a considerable layer thickness is provided which can readily be penetrated by the fibers.

Such a glue foam according to the invention is produced mechanically by the mechanical frothing method or by means of dissolver disks. In this case, a foam suited for spread application is formed by beating in air, which foam may be applied to the lamination, whereupon the lamination is laid onto the mineral wool. The glue mixture contains a certain amount of water in order to reduce its viscosity to such an extent that mechanical frothing by the mechanical frothing method by means of dissolver disks is facilitated. The glue mixture used herefor is an aqueous mixture of organic glue, foaming agent, and foam stabilising agent, which may optionally contain an addition of fireproofing agent if required.

As a glue for laminating with foil, numerous organic glues are known in the prior art. Within the scope of the invention, particularly good results were achieved with Mowilith®, a thermoplastic synthetic resin glue of Hoechst AG, and Vinnapas®, a thermoplastic synthetic resin glue of Wacker Chemie.

The aqueous dispersion of the organic glue moreover contains a foaming agent which is known per se, such as a surfactant having a certain film forming capacity and thus supporting the generation of foam in liquids. The glue mixture furthermore contains a foam stabilising agent which is known per se, counteracting a premature decomposition of the foam. The foam is suited for spread application and has a consistency similar to that of whipped cream or beaten egg-whites, with the foam volume corresponding to approximately the five- or sixfold of the previous liquid volume.

Frothing the glue used for lamination, preferably in a frothing device by means of dissolver disks, considerably increases not only the volume of the glue mixture; it also ensures that all the fibers in the vicinity of the mineral wool product surface are exposed to contact with the glue, whereby a three-dimensional reticulate connecting structure is created, i.e. a three-dimensional accumulation of glue which is line or dot shaped when viewed from above, between the fibrous surfaces to be connected and the foil surface, with zones free of glue or comprising little glue between the accumulations. The foam spread on the lamination penetrates into the layer adjacent the surface of the mineral wool product and encloses the mineral fibers located there.

The glue containing free water, the foam bubbles subsequently start to burst during curing o.f the glue foam, with the glue thus released from areas in between the individual fivers getting into contact with the fibers due to adhesion. This establishes a particularly intimate bond between the fibers and the glue, whereby the already intimate bond between the glue and the lamination foil takes effect such as to improve adhesion of the foil. The three-dimensional character of the reticulate foam structure is preserved, even though the number of connections bridging larger gaps between fiber surfaces and foil surface, where located at a distance from each other, tends to decrease.

The amount of applied organic glue conventionally is approximately 30 g/m² (dry) for usual applications, such as for example lamination of rolled felt. According to the invention, this amount may considerably be reduced without excessively deteriorating the adhesive capacity.

In accordance with the invention, for lamination of rolled felt, applied amounts in the range of 5 g/m² or less are typical for the present invention.

According to an embodiment of the glue foam used in accordance with the invention, it contains:

| | |
|---|---|
| 25-40%(wt.) | dispersion of an organic glue (water content 60%, corresponding to 10 to 16%(wt.) dry glue substance) |
| | |
| 0.5-1.5%(wt.) | foaming agent |
| | |
| 0.05-0.3%(wt.) | foam stabilising agent, fireproofing agent (flame-inhibiting agent) in the amount required for a specific application |
| | |
| balance | water. |

Suited mineral wool products are mineral wool rolled felts, because in view of the rolling process it presents the highest requirements which are particularly well satisfied by the invention.

### Example 1

| | |
|---|---|
| 33%(wt.) | Mowilith® Dispersion DM132 (water content 60%), a thermoplastic synthetic resin glue of Hoechst AG, |
| | |
| 1%(wt.) | foaming agent W53 of Zschimmer & Schwarz |
| | |
| 0.1%(wt.) | foam stabilising agent PS1 of Zschimmer & Schwarz |
| | |
| balance | water |

This mixture was frothed in an agitator and applied onto an aluminum foil in an amount of 5 g/m² Mowilith® (dry) by means of a doctor blade. Afterwards a rollable mineral wool felt was laid on the foam-coated aluminum foil and bonded in temperature. Here it was found that the foil presented an excellent adhesion to the mineral wool felt although the used quantity of glue was greatly reduced in comparison with hitherto customary amounts of glue.

### Example 2

| | |
|---|---|
| 32.7%(wt.) | Vinnapas® Dispersion EP 177 (water content 60%) of Wacker Chemie (a vinyl acetate and ethylene copolymer) |
| | |
| 0.64%(wt.) | W53 foaming agent of Zschimmer & Schwarz |
| | |
| 0.19%(wt.) | PS1 foam stabilising agent of Zschimmer & Schwarz |
| | |
| 1.6%(wt.) | Luvogard (phosphoric acid ester) as a fireproofing agent |
| | |
| 12.8%(wt.) | BACO SF4 (aluminum hydroxide) as a fireproofing agent |
| | |
| balance | water |

This mixture was frothed by means of dissolver disks in accordance with the mechanical frothing method and applied onto an aluminum/kraft paper compound foil by means of a doctor blade. Subsequently, a rollable mineral wool felt was laid on the foam-coated compound foil and bonded while heated. Here, as well, the result was an excellent adhesion of the compound foil to the mineral wool felt at an amount of organic glue reduced by more than 80% in comparison with hitherto customary amounts of glue.

As the fireproofing agent, a combination of phosphoric acid ester and aluminum hydroxide is used. Phosphoric acid ester is considerably more cost-intense than aluminum hydroxide, however it also serves as a softener for the glue. Thus, where it is required to reduce brittleness and improve elasticity of the glue, the phosphoric acid ester content in the fireproofing agent may be increased; for the rest it is kept low in order to minimise costs.

## Claims

1. Rollable mineral wool felt laminated with a foil which is a metal or aluminum/kraft paper compound foil connected by means of an organic glue, **characterised in that** said glue represents a three-dimensional reticulate connecting structure consisting of a network of lines and dots of the glue structure between the fibers in the area of the felt surface and said foil, wherein said glue is concentrated in single glue accumulations adhering at the fibers in the vicinity of the mineral wool felt surface with glue-free spots in between the glue accumulations, so that the fibers located close to the felt surface are locked among each other and said foil is fastened thereto.

2. Method or producing a rollable mineral wool felt according to claim 1, wherein a layer of a free water containing organic glue in the form of foam is applied on one surface of the foil which is to be combined with a surface of the mineral wool felt,
subsequently said surfaces are joined together by pressing the foil against the fibrous surface of the mineral wool felt, wherein the foam penetrates into the layer adjacent the mineral wool felt surface and encloses the mineral fibers located there, and
the foam is cured by being heated, whereby the foam degenerates and the glue is concentrated in single glue accumulations adhering at the fibers in the layer adjacent the felt surface with glue-free spots in between the glue accumulations so that a three-dimensional reticulate connecting structure consisting of a network of lines and dots of the glue structure between the fibers in the area of felt surface and said foil is created, thus locking the fibers located close to the felt surface among each other and fastening said foil thereto.

3. Method according to claim 2, **characterised in that** said glue foam is produced by means of a mechanical method shortly before its use from a mixture containing an organic glue, a foaming agent, a foam stabiliser, in a given case a fireproofing agent (flame-inhibiting agent), and water.

4. Method according to claim 3, **characterised in that** the glue foam has a mixture of
| | |
|---|---|
| 10 - 16% by weight | organic glue (dry) |
| 0.5 - 1.5% by weight | foaming agent |
| 0.05 - 0.3% by weight | foam stabiliser fireproofing agent as required |
| balance | water, |
which is foamed in accordance with a mechanical method.

## Patentansprüche

1. Rollbarer Mineralwollefilz, der mit einer Folie kaschiert ist, welche eine Metallfolie oder eine Aluminium-Kraftpapier-Verbundfolie ist, die mittels eines organischen Klebers angebracht ist, **dadurch gekennzeichnet, daß** der Kleber eine räumliche netzartige Verbindungsstruktur bestehend aus einem Netzwerk von Linien und Punkten der Kleberstruktur zwischen den Fasern im Bereich der Filzoberfläche und der Folie darstellt, wobei der Kleber in einzelnen Klebstoffanhäufungen konzentiert ist, welche an den oberflächennahen Fasern des Mineralwollefilzes mit Kleberlücken zwischen den Klebstoffanhäufungen anhaften, so daß die nahe der Filzoberfläche angeordneten Fasern miteinander verankert sind und die Folie daran befestigt ist.

2. Verfahren zur Herstellung eines rollbaren Mineralwollefilzes nach Anspruch 1, wobei
eine Schicht eines freies Wasser enthaltenden organischen Klebers in Form von Schaum auf eine Oberfläche der Folie aufgebracht wird, welche mit einer Oberfläche des Mineralwollefilzes zu verbinden ist,
nachfolgend die Oberflächen miteinander verbunden werden durch Andrücken der Folie gegen die Faseroberfläche des Mineralwollefilzes, wobei der Schaum in die oberflächenseitige Schicht des Mineralwollefilzes eindringt und die dort angeordneten Mineralfasern umgibt, und
der Schaum unter Erwärmung ausgehärtet wird, wodurch sich der Schaum zurückbildet und sich der Kleber in einzelnen Klebstoffanhäufungen konzentiert, welche an den Fasern in der Schicht benachbart der Filzoberfläche mit Kleberlücken zwischen den Klebstoffanhäufungen anhaften, so daß eine räumliche netzartige Verbindungsstruktur bestehend aus einem Netzwerk von Linien und Punkten der Kleberstruktur zwischen den Fasern im Bereich der Filzoberfläche und der Folie hergestellt wird, wodurch die nahe der Filzoberfläche angeordneten Fasern miteinander verankert werden und die Folie daran befestigt wird.

3. Verfahren nach Anspruch 2, **dadurch gekennzeichnet, daß** der Kleberschaum kurz vor seiner Anwendung aus einer Mischung, die einen organischen Kleber, einen Schaumbildner, einen Schaumstabilisator, ggf. ein Flammschutzmittel (Brandhemmer) und Wasser enthält, mit einem mechanischem Verfahren erzeugt wird.

4. Verfahren nach Anspruch 3, **dadurch gekennzeichnet, daß** der Kleberschaum eine Mischung aufweist aus
| | | |
|---|---|---|
| 10-16 | Gewichtsprozent | organischem Kleber (trocken) |
| 0,5-1,5 | Gewichtsprozent | Schaumbildner |
| 0,05-0,3 | Gewichtsprozent | Schaumstabilisator |
| | | Flammschutzmittel je nach Bedarf |
| Rest | | Wasser, |
die nach einem mechanischem Verfahren aufgeschäumt ist.

## Revendications

1. Feutre de laine minérale que l'on peut rouler, stratifié avec une feuille, qui est une feuille composée de métal ou d'aluminium/papier kraft, reliée à l'aide d'une colle organique, **caractérisé en ce que** ladite colle représente une structure de liaison réticulée tridimensionnelle consistant en un réseau de lignes et de points de la structure de la colle entre les fibres dans la zone de la surface du feutre et de ladite feuille, où ladite colle est concentrée dans des accumulations de colle individuelles adhérant aux fibres à proximité de la surface du feutre de laine minérale avec des endroits sans colle entre les accumulations de colle, de façon telle que les fibres situées près de la surface du feutre sont emprisonnées les unes parmi les autres et ladite feuille y est fixée.

2. Procédé de production d'un feutre de laine minérale que l'on peut rouler selon la revendication 1, dans lequel une couche d'une colle exempte d'eau, sous forme de mousse, est appliquée sur une surface de la feuille à combiner avec une surface du feutre de laine minérale,
ensuite lesdites surfaces sont jointes ensemble en pressant la feuille contre la surface fibreuse du feutre de laine minérale, dans lequel la mousse pénètre dans la couche proche de la surface du feutre de laine minérale et entoure les fibres minérales y sont situées, et
la mousse est durcie par échauffement, ce qui fait que la mousse dégénère et la colle est concentrée dans des accumulations de colle individuelles, adhérant aux fibres dans la couche proche de la surface du feutre, avec des endroits sans colle entre les accumulations de colle, de sorte qu'est créée une structure de liaison réticulée tridimensionnelle consistant en un réseau de lignes et de points de la structure de colle entre les fibres dans la zone de la surface du feutre et de ladite feuille, emprisonnant ainsi les fibres situées près de la surface du feutre les unes parmi les autres et y fixant ladite feuille.

3. Procédé selon la revendication 2, **caractérisé en ce que** ladite mousse de colle est produite à l'aide d'un procédé mécanique extemporanément son utilisation à partir d'un mélange contenant une colle organique, un agent moussant, un stabilisant de mousse, le cas échéant, un agent ignifuge (agent inhibant les flammes) et l'eau.

4. Procédé selon la revendication 3, **caractérisé en ce que** la mousse de colle possède un mélange de :
| | |
|---|---|
| 10 à 16% en poids | de colle organique (sèche) |
| 0,5 à 1,5% en poids | d'agent moussant |
| 0,05 à 0,3% en poids | d'agent stabilisateur de mousse agent ignifuge si nécessaire |
| le complément | en eau, |
que l'on fait mousser conformément à un procédé mécanique.
